# EUROPEAN PATENT APPLICATION

(11) **EP 2 244 195 A2**
(43) Date of publication of application: **27.10.2010**
(21) Application number: 10160269.6
(22) Date of filing: 19.04.2010
(51) Int. Cl.: G06F 17/30

(54) **System and method for implicit tagging of documents using search query data**

(30) Priority: 22.04.2009 US 428412
(71) Applicant: Palo Alto Research Center Incorporated, Palo Alto, California 94304 (US)
(72) Inventor: Hong, Lichan, Mountain View, CA 94040 (US); Chi, Ed H, Palo Alto, CA 94306 (US); Nairn, Rowan, San Francisco, CA 94103 (US)
(74) Representative: Skone James, Robert Edmund

(57) **Abstract**

A computer-implemented system and method for implicit tagging of documents using search query data is provided. A corpus of documents including electronically-stored digital data is identified (402). A search query including one or more query terms from a user is received (404). The search query is executed against the document corpus (406). Search results including an identifier for each of the documents in the corpus that matches at least one of the query terms are obtained (408). A selection of one or more of the identifiers by the user is captured (410). A set of click-through tags that each include the user, one of the selected identifiers, and the matching query terms is created (412).

## Description

This application relates in general to digital information categorization and, in particular, to a system and method for implicit tagging of documents using search query data.

"Web 2.0" informally refers to Web-based services, including Web sites, developed to encourage communication and collaboration between users as opposed to the focus of the first generation of the World Wide Web, referred to as "Web 1.0," on information access and retrieval. Web 2.0 services included social networking, such as Facebook (www.facebook.com), and content-sharing, such as YouTube (www.youtube.com), and Web logs, or "blogs". Web 2.0 services include, for example, active user participation through generation, categorization, and sharing of content.

Tagging is another key component of Web 2.0, which allows a user to associate selected Web content with one or more freely chosen tags, or keywords. Tagging allows a user to efficiently retrieve Web content that was tagged at a later time. For example, Delicious (www.delicious.com) allows a user to apply tags to Web page bookmarks. Subsequently, the user can search and retrieve the Web page from his personal bookmarked collection using the previously applied tags. Additionally, the user's bookmarks and tags can be shared with other users who can view, search, and add their own tags. Aggregation of the tags of many users creates a *folksonomy,* or social tagging, that makes the tagged content easier to search, browse, and navigate over time as more tags and users are added. Other examples include Flickr (www.flikr.com) and last.fm (www.last.fm) that allow tagging and sharing of photos and music, respectively.

Tags, therefore, provide a valuable data mining tool to individual users as well as an entire community of users. The value of tags, and consequently, the folksonomy of the Web services that provide tagging tools, is dependent on the quantity of tags and topics covered by the tags. As more users utilize the tagging features, additional users are attracted to the service. Unfortunately, tagging exacts a user cost requiring explicit effort to identify and manually tag content. User hesitancy or reluctance to undertake the effort necessary to tag content, especially at the early stages of deployment of a tagging service, can lead to a low adoption rate of the tagging service, which results in data sparcity of the number of tags and topics covered. Additionally, some sites, such as Flickr and YouTube, only allow the user who uploads content to tag that content, further reducing the amount of initial tagging data available.

Therefore, an approach is needed to introduce tagged content into a tagging system without sole reliance on explicit user effort. Preferably, such an approach would use implicit user actions to tag content and thereby facilitate social tagging of Web content, so users are more likely to collaborate and share tagged content.

According to aspects illustrated herein, there is provided a computer-implemented system and method for implicit tagging of documents using search query data. A corpus of documents including electronically-stored digital data is identified. A search query including one or more query terms from a user is received. The search query is executed against the document corpus. Search results including an identifier for each of the documents in the corpus that matches at least one of the query terms are obtained. A selection of one or more of the identifiers by the user is captured. A set of click-through tags that each includes the user, one of the selected identifiers, and the matching query terms is created.

Some examples of systems and methods according to the invention will now be described with reference to the accompanying drawings, in which:-
FIGURE 1 is a block diagram showing an exemplary environment for implicit tagging of documents using search query data.
FIGURE 2 is a block diagram showing a general purpose computer for carrying out embodiments disclosed herein, such as the embodiment shown in FIGURE 1.
FIGURE 3 is a table showing a comparison of aspects of click-through tags and annotated tags.
FIGURE 4 is a flow diagram showing a method for implicit tagging of documents using search query data in accordance with one embodiment.
FIGURE 5 is a flow diagram showing a routine for revising the social tag corpus for use with the method of FIGURE 4.
FIGURE 6 is a graph showing, by way of example, relative contribution of click-through tags and annotated tags to the social tag corpus over time.
FIGURE 7 is a data flow diagram showing, by way of example, document types for use with the method of FIGURE 4.

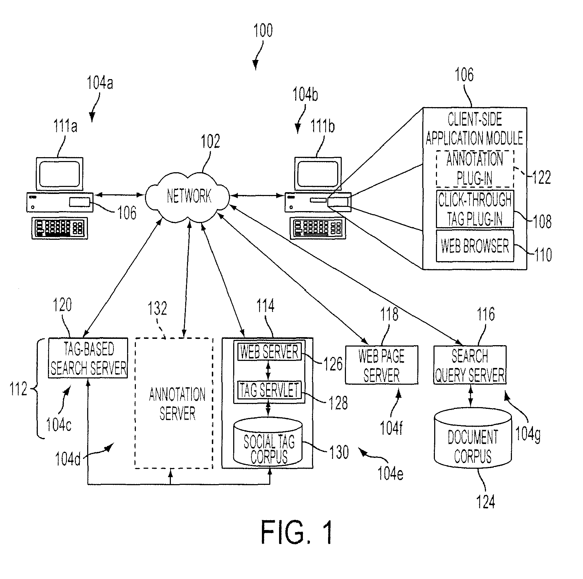

Context from search queries can be captured and dynamically utilized for implicit social tagging of documents. FIGURE 1 is a block diagram showing an exemplary environment for implicit tagging of documents using search query data. In the environment, general purpose computers 104a-g communicate and exchange information over a network 102, such as the Internet, and are programmed to perform either client-side or server-side operations. Other network 102 structures, such as a corporate enterprise network configured as an intranetwork, are possible. Alternatives to client-server arrangements are possible, such as central terminal-based arrangements, or combinations thereof.

The client-side operations are performed by general purpose computers 104a-b loaded with client-side application module 106, which includes click-through tag plug-in 108 and Web browser 110. In a further embodiment, the client-side application module 106 can further include annotation plug-in 122. The server-side operations are performed by general purpose computers 104c-g loaded with one or more server-side application module 112, which includes either one, or a combination of one or more, of social tag module 114, search query server 116, and Web page server 118. In a further embodiment, the server-side application module 112 can also include one or more of annotation module 114, Web page (or Web document) servers 118, and tag-based search server 120. Still further client-side or server-side modules are possible. In a further embodiment, specific purpose computers can be programmed to carry out the client-side or server-side operations.

Initially, the Web browser 110 is initialized with the click-through plug-in 108, which includes operations for communication with the server-side application module 112. The Web browser 110 receives input from a user requesting a search query, including one or more query terms, which the Web browser 110 communicates to the search query server 116. The search query server 116 maintains or has access to a document corpus 124 containing a collection of documents, as defined *infra*. The search query server 116 applies the search query against the document corpus 124 and returns search results containing a list of matching documents to the Web browser 110 for display to the user. The list of matching documents can match all or a subset of the search query. Preferably, the matching documents are presented as a list to the user that includes hyperlinks to the document, though other forms of presentation are possible, such as displaying thumbnail images of the matching documents. A user can then select a search result from the list to access the desired document using, for example, a uniform resource locator (URL) that identifies a location on the network 102 of a server, such as a Web page server 118, storing the document.

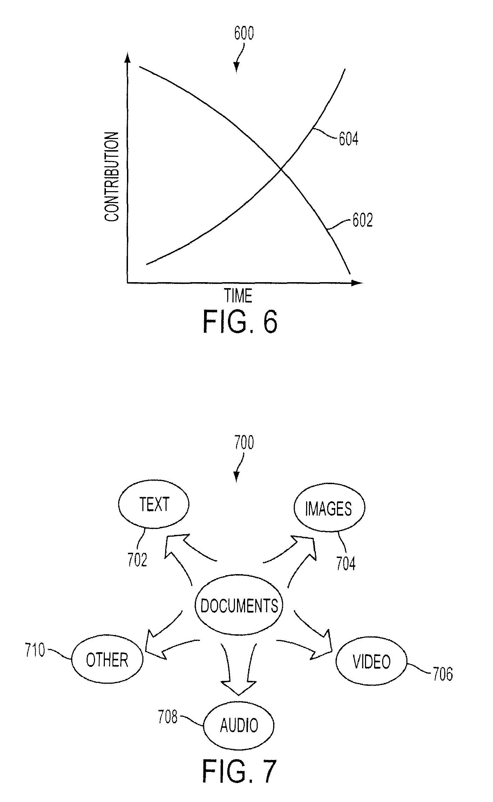

A document is a collection of electronic data that may define a variable number of pages depending on how the collection of electronic data is formatted when viewed, such as documents that may be viewed using a Web browser, for example Web pages. The electronic data making up a document may consist of static content, dynamic content, or a combination thereof, as further discussed below with reference to FIGURE 7.

The click-through tag plug-in 108 parses out the query terms of the search request and communicates the query terms through Web server 126 to tag servlet 128, which stores the query terms in a structured data repository in the social tag corpus 130. In a further embodiment, only the query terms that are found in a matching document are stored. Additionally, the click-through tag plug-in 108 identifies the URL selected by the user and stores the URL in the social tag corpus 130. Moreover, user information, such as a user or login name, is identified by the click-through tag plug-in 108 and stored. The query term, URL, and user identification are stored as a data triple, or click-through tag. In a further embodiment, the query term, URL, and user identification can be stored separately and logically linked. In a further embodiment, the click-through tag can be used to seed a social tagging service, such as described in *infra*. In a further embodiment, a proxy server (not shown) operating on the network 102 can carry out the functions of the click-through tag plug-in 108.

In a further embodiment, the client-side application module 106 includes an annotation plug-in 122 and the server-side application module 112 includes an annotation server 132 that enables explicit manual user tagging of entire, or selected portions of, documents. Other ways of explicitly tagging documents are possible. The tag, the tagged document, and the identification of the user that tagged the document are stored in the social tag corpus as an annotated tag.

In a further embodiment, the click-through tags and annotated tags stored in social tag corpus 130 may be searched using tag-based search server 120 through a user interface running on the Web browser 110, such as described in *supra.* Other approaches for searching tags are possible.

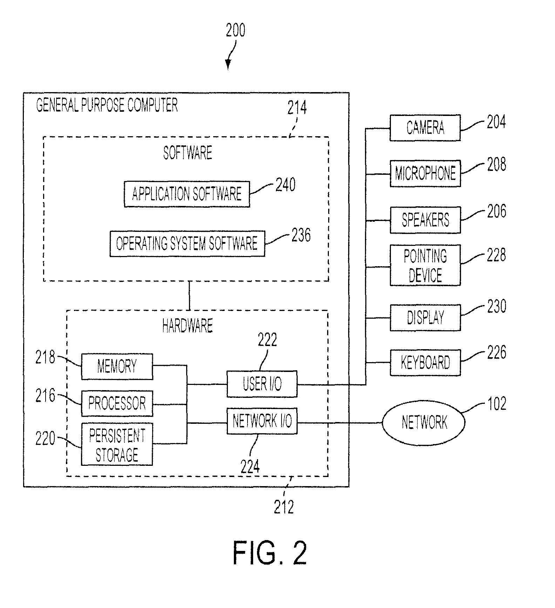

FIGURE 2 is a block diagram showing a general purpose computer for carrying out embodiments disclosed herein, such as the embodiment shown in FIGURE 1. The general purpose computer 104a-g includes hardware 212 and software 214. The hardware 212 can include a processor, such as a CPU, 216, memory 218 (ROM, RAM, and so forth), persistent storage 220, such as CD-ROM, hard drive, floppy drive, or tape drive, user input/output (I/O) 222, and network I/O 224. The user I/O 222 can include a camera 204, a microphone 208, speakers 206, a keyboard 226, a pointing device 228, for example, a pointing device or mouse, and a display 230. The network I/O 224 may, for example, be coupled to a network 102, such as the Internet. The software 214 of the general purpose computer 104a-g includes operating system software 236 and application software 240, which may include the instructions of the client-side application module 106 or the server side application module 112. The software 214 is generally read into the memory 218 to cause the processor 216 to perform specified operations, including the application software 240 with the instructions of the client-side application module 106 or the server side application module 112.

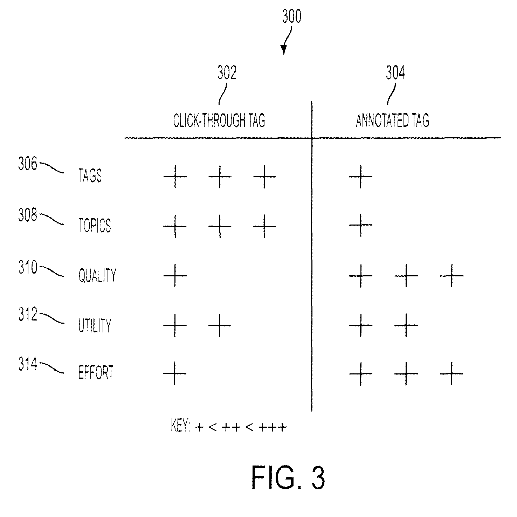

Click-through tags and annotated tags can provide unique value to the social tag corpus. FIGURE 3 is a table 300 showing a comparison of aspects of click-through tags 302 and annotated tags 304. Click-through tags 302, especially at the early stages of creating a social tag corpus, can provide a greater number of tags 306 and topic 308 coverage than conventional annotated tags 304, which have been selected and hand-entered by users. Since click-through tags 302 are generated from search queries of users, the variety of tags 306 and topics 308 will vary as much as the number and types of users making the queries. Moreover, click-through tags 302 require no additional effort 314, or cost, to users for their creation. However, the additional user cost of explicitly tagging documents can lead to annotated tags 304 that are of equal or perhaps higher quality 310 than the implicitly generated click-though tags 302. Annotated tags 304 require a user to review the document, think about the content of the document, and annotate the document with one or more tags, while click-through tags 302 can be generated prior to the user reviewing the document. On the other hand, once created, the utility 312 of annotated tags 304 and click-through tags 302 to the user are generally comparable in a broad sense.

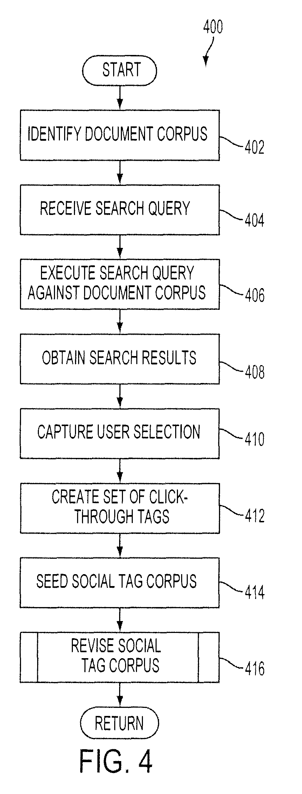

Click-through tags provide valuable social tagging data at little to no additional user cost. FIGURE 4 is a flow diagram showing a method 400 for implicit tagging of documents using search query data in accordance with one embodiment. The method is performed as a series of process or method steps performed by, for instance, a general purpose programmed computer 104a-g, such as described above with reference to FIGURES 1 and 2.

A corpus of documents is identified (step 402). Documents are electronic data, such as a Web page, that can be viewed in a Web browser. Documents can consist of static or dynamic content, or a combination thereof, as further described below with reference to FIGURE 7. A user inputs a search query of one or more query terms, which is received (step 404) and executed against the corpus of documents (step 406). Documents matching the query terms are obtained (step 408) and the search results are presented to the user as a list of hyperlinks, such as URLs, to the documents. Other modes of presentation are possible. In a further embodiment, documents matching only a subset of the query terms are obtained and presented to the user.

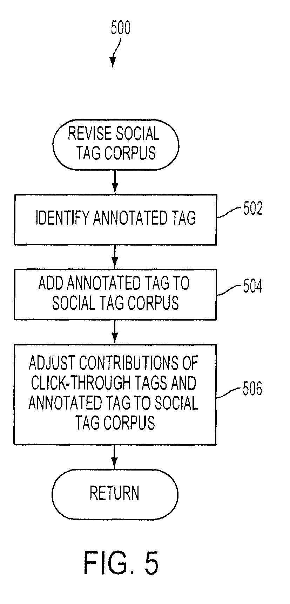

Upon selection of a URL by the user, the selection is captured by the click-through tag plug-in (step 410). Additionally, the query terms are parsed and, along with the URL and user information, are used to create a set of click-through tags (step 412). The click-through tags are used to seed a social tag corpus (step 414). In a further embodiment, the click-through tags, upon creation, can be stored in a separate data repository and added to the social tag corpus 130 at a later time point. The social tag corpus 130 can be revised (step 416), as necessary, with annotated tags explicitly created by the user or one or more different users, as further described below with reference to FIGURE 5.

The social tag corpus can be supplemented with explicitly created annotated tags. FIGURE 5 is a flow diagram showing a routine 500 for revising the social tag corpus 130 for use with the method of FIGURE 4. An annotated tag created by a user is identified (step 502). The annotated tag is added to the social tag corpus 130 (step 504). Optionally, the relative contribution of click-through tags and annotated tags to the social tag corpus is adjusted (step 506), as further described below with reference to FIGURE 6.

In a further embodiment, the click-through tags and annotated tags stored in social tag corpus 130 can be searched, such as further described above with reference to FIGURE 1. A user can search the social tag corpus 130 by inputting one or more search terms and the search query is applied to the social tag corpus 130. Tags, including the click-through tags and annotated tags, that match one or more of the search query terms are identified and the results are presented to the user. The search results can be displayed to the user based on the relative contribution of the click-through tags and annotated tags to the social tag corpus 130, as further described below with reference to FIGURE 6.

FIGURE 6 is a graph 600 showing, by way of example, relative contribution of click-through tags 602 and annotated tags 604 to the social tag corpus 130 over time. The x-axis represents time and the *y*-axis represents relative contribution. The relative contribution of click-through tags 602 and annotated tags 604 to the social corpus 130 can be adjusted as desired. For example, over time, as more annotated tags 604 are added to the social tag corpus 130, the relative contribution of the click-through tags 602 can be reduced. For example, the relative weights of the click-through tags 602 and annotated tags 604 can be differentiated, with the annotated tags 602 weighted more heavily or the click-through tags 604 weighted less heavily. In a further embodiment, the order of results of a search of the social tag corpus 130 can favor the annotated tags 604 over the click-through tags 602 based on the ranking. In a further embodiment, the relative contribution of click-through tags 602 can be reduced by removing selected or the entire collection of click-through tags 602 from the social tag corpus 130 or by preventing the addition of further click-through tags 602 to the social tag corpus 130. The adjustment of the contribution of the click-through tags 602 and annotated tags 604 can occur on a tag-by-tag, user-by-user, or URL-by-URL basis. Other ways of reducing the relative contribution of the click-through tags 602 are possible.

A range of documents can be tagged by users. FIGURE 7 is a data flow diagram showing, by way of example, document types 700 for use with the method of FIGURE 4. A document is a collection of electronically-stored data that can define a variable number of pages depending on how the collection of electronic data is formatted when viewed, such as documents that may be viewed using a Web browser. Types of documents 700 include static content, such as text 702 and images 704, as well as dynamic or playable content, such as video 706 and audio 708. Additionally, a document can include different types of documents in combination. Other types of documents are possible.

Using the foregoing specification, the embodiments disclosed herein may be implemented as a machine (or system), process (or method), or article of manufacture by using standard programming or engineering techniques to produce programming software, firmware, hardware, or any combination thereof. Those skilled in the art will appreciate that the flow diagrams described in the specification are meant to provide an understanding of different possible embodiments. As such, alternative ordering of the steps, performing one or more steps in parallel, or performing additional or fewer steps may be done in alternative embodiments.

Any resulting program or programs, having computer-readable program code, may be embodied within one or more computer-usable media such as memory devices or transmitting devices, thereby making a computer program product or article of manufacture according to the disclosed embodiments. As such, the terms "article of manufacture" and "computer program product" as used herein are intended to encompass a computer program existent (permanently, temporarily, or transitorily) on any computer-usable medium such as on any memory device or in any transmitting device.

A machine embodying the disclosed embodiments may involve one or more processing systems including, but not limited to, CPU, memory/storage devices, communication links, communication/transmitting devices, servers, I/O devices, or any subcomponents or individual parts of one or more processing systems, including software, firmware, hardware, or any combination or subcombination thereof, which embody the disclosed embodiments as set forth in the claims. Those skilled in the art will recognize that memory devices include, but are not limited to, fixed (hard) disk drives, floppy disks (or diskettes), optical disks, magnetic tape, semiconductor memories such as RAM, ROM, and PROM. Transmitting devices include, but are not limited to, the Internet, intranets, electronic bulletin board and message/note exchanges, telephone/modem based network communication, hard-wired/cabled communication network, cellular communication, radio wave communication, satellite communication, and other stationary or mobile network systems/communication links.

## Claims

1. A computer-implemented system for implicit tagging of documents using search query data, comprising:
a database storing a corpus of documents comprising electronically-stored digital data;
a search query server receiving a search query comprising one or more query terms from a user, executing the search query against the document corpus, and obtaining search results comprising an identifier for each of the documents in the corpus that matches at least one of the query terms;
a click-though tag plug-in capturing a selection of one or more of the identifiers by the user; and
a social tag module creating a set of click-through tags that each comprise the user, one of the selected identifiers, and the matching query terms.

2. A system according to claim 1, wherein the social tag module seeds a corpus of social tags with the click-through tags.

3. A system according to claim 2, wherein the click-through tags are seeded one of upon creation and at a set time point.

4. A system according to claim 2 or claim 3, further comprising:
an annotation server revising the corpus of social tags with annotated tags.

5. A system according to claim 4, wherein the click-through tags and the annotated tags are differentially weighted in the corpus of social tags.

6. A system according to claim 5, further comprising:
a tag-based search server applying a tag search query comprising at least one query term against the social tag corpus, obtaining tag search results comprising at least one of the click-through tags and annotated tags, and ranking the tag search results based on the differential weights.

7. A system according to claim 3, wherein revising the corpus of social tags comprises one of removing one or more of the click-through tags and ending seeding of the corpus of social tags.

8. A system according to any of the preceding claims, wherein the social tag module seeds a social tagging system with the click-through tags.

9. A system according to any of the preceding claims, wherein the document is selected from one or more of text, image, video, and audio.

10. A system according to any of the preceding claims, wherein the obtained search results for each of the documents in the corpus matches all of the one or more query terms.

11. A computer-implemented method for implicit tagging of documents using search query data, comprising:
identifying a corpus of documents comprising electronically-stored digital data;
receiving a search query comprising one or more query terms from a user;
executing the search query against the document corpus;
obtaining search results comprising an identifier for each of the documents in the corpus that matches at least one of the query terms;
capturing a selection of one or more of the identifiers by the user; and
creating a set of click-through tags that each comprise the user, one of the selected identifiers, and the matching query terms.

12. A method according to claim 11, further comprising:
maintaining a corpus of social tags; and
seeding the corpus of social tags with the click-through tags.

13. A method according to claim 12, further comprising:
revising the corpus of social tags with annotated tags.

14. A method according to claim 13, further comprising:
differentially weighting the click-through tags and the annotated tags in the corpus of social tags.

15. A method according to claim 14, further comprising:
applying a tag search query comprising at least one query term against the social tag corpus;
obtaining tag search results comprising at least one of the click-through tags and annotated tags; and
ranking the tag search results based on the differential weights.
